# EUROPEAN PATENT SPECIFICATION

(11) **EP 3 197 018 B1**
(45) Date of publication and mention of the grant of the patent: **12.06.2019**
(21) Application number: 17152131.3
(22) Date of filing: 19.01.2017
(51) Int. Cl.: H02J 50/12, H02J 7/00, H02J 50/40

(54) **CONTACTLESS POWER SUPPLY SYSTEM**
KONTAKTLOSES LEISTUNGSVERSORGUNGSSYSTEM
SYSTÈME D'ALIMENTATION ÉLECTRIQUE SANS CONTACT

(30) Priority: 19.01.2016 JP 2016008073
(43) Date of publication of application: 26.07.2017
(73) Proprietor: Daihen Corporation, Osaka 532-8512 (JP)
(72) Inventor: KOTANI, Hiroyuki, Osaka-shi, Osaka 532-8512 (JP)
(74) Representative: Boult Wade Tennant LLP

(56) References cited:
- EP-A1- 2 530 811
- EP-A2- 2 587 684
- JP-A- 2013 070 581
- US-A1- 2013 162 205
- US-A1- 2014 015 332

## Description

### BACKGROUND OF THE INVENTION

### 1. Field of the Invention:

The present invention relates to a contactless power supply system for contactless transmission of power from a power transmitter to a power receiver. The present invention also relates to a power receiver for use in such a contactless power supply system.

### 2. Description of the Related Art:

Contactless power supply systems recently known in the art magnetically couple a power transmitter to a power receiver through a pair of coils. Alternating current (AC) power generated by the power transmitter is transmitted to the power receiver through the magnetically coupled coils without physical contact. Contactless power supply systems are currently used in, for example, electric automobiles, industrial systems and portable electronic devices. Some contactless power supply systems are employed in charging devices to charge a power storage device, which is included in a power receiver, with power transmitted contactlessly from a power transmitter.

A charging device employing such a contactless power supply system may overcharge a power storage device if a power transmitter continues to feed power to the power storage device in a full charge state. Overcharging may reduce the life of the power storage device and increase wasteful power consumption.

JP-A-2013-70581 discloses a wireless charging system that includes a power transmitter capable of computing the time rate of change of power reflected from a power receiver. By monitoring the time rate of change of reflected power, the power transmitter can determine whether or not a power storage device (secondary battery) included in the power receiver is completely charged. Thus, even with no communication means provided, the conventional power transmitter can determine the charge completion of the power storage device and stop power supply to the power receiver upon completion of charging.

There may be some cases, however, in which determining the charge completion of the power storage device based on the time rate of change of the reflected power may not be reliable. As disclosed in JP-A-2013-70581, the reflected power gradually changes (increases) while the power storage device is being charged. The time rate of change of the reflected power decreases as the power storage device becomes fully charged (as the charge level nears 100%) . When the time rate of change falls below a predetermined threshold, the wireless charging system determines that the power storage device is completely charged and stops the power transmission. In reality, however, the reflected power slightly fluctuates while increasing in response to the charge state of the power storage device. Accordingly, the time rate of change of the reflected power fluctuates. Due to the fluctuations, the time rate of change of the reflected power may momentarily fall below the threshold although the power storage device is not completely charged yet. This may lead to the premature stopping of the power transmission from the power transmitter.

Further, JP-A-2013-70581 teaches using two kinds of charging modes, i.e., constant voltage charge performed after constant current charge. The above-noted charge completion determining method is not applicable to a device using a different charging method (for example, constant current charge only) . For example, as known in the art, a capacitor may be used as a power storage device, and when charged with constant current, the voltage between the terminals of the capacitor will increase linearly with time. Because of this characteristic, which is suitable for fast charging, use may be made of constant current only for charging a capacitor-type power storage device. In this case, however, the time rate of change of the reflected power substantially remains the same throughout the charging process, as disclosed in JP-A-2013-70581. Hence, the above-noted method is not applicable.

US 2013/0162205 A1 discloses a power supply device which supplies electric power to a power receiving device including a power receiving unit in a non-contact manner.

### SUMMARY OF THE INVENTION

The present invention has been proposed in view of the above-noted circumstances. It is therefore an object of the invention to provide a contactless power supply system that enables, without using communication means, a power transmitter to appropriately determine that a power storage device included in a power receiver is completely charged for stopping the power transmission to the power receiver. The present invention also aims to provide a power receiver for use in the contactless power supply system.

According to a first aspect of the present invention, there is provided a contactless power supply system according to claim 1.

### BRIEF DESCRIPTION OF THE DRAWINGS

Fig. 1 is a diagram showing an overall configuration of a contactless power supply system according to an embodiment.
Fig. 2 is a diagram showing an exemplary configuration of a switch according to an embodiment.
Fig. 3 is a flowchart illustrating power transmission control by a power transmitter according to an embodiment.
Fig. 4 is a flowchart illustrating charge control by a power receiver according to an embodiment.
Figs. 5A and 5B are diagrams each showing an exemplary configuration of a charging circuit (exemplary arrangement of a switch) according to a modification.
Fig. 6 is a diagram showing an exemplary configuration of a power transmitter (with power transmitting units connected in parallel) according to a modification.
Fig. 7 is a diagram of a power transmitter (with power transmitting units connected in series) according to a modification.

### DETAILED DESCRIPTION OF THE PREFERRED EMBODIMENTS

The following describes a contactless power supply system according to the present invention and a power receiver for use in the contactless power supply system. In the description, reference is made to the accompanying drawings.

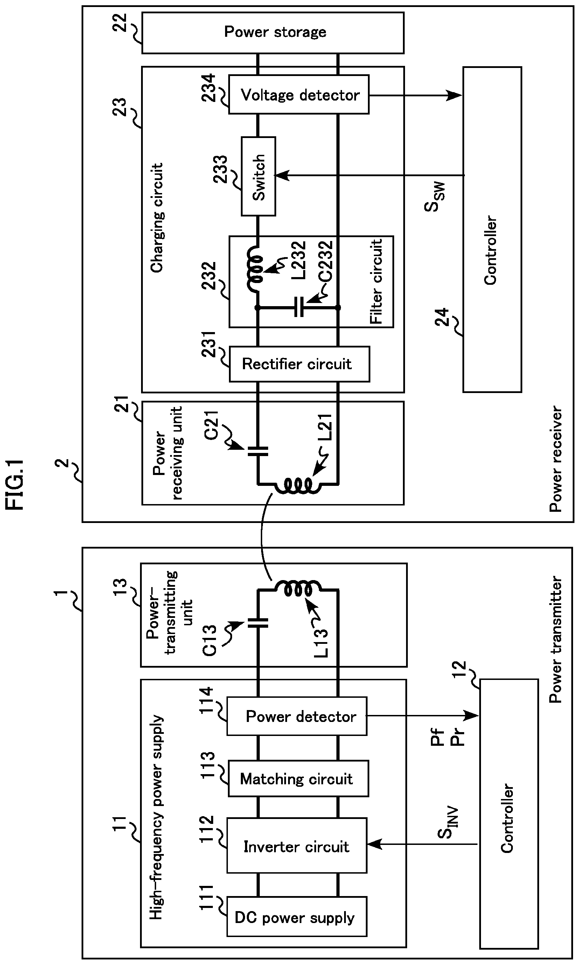

Fig. 1 shows an overall configuration of a contactless power supply system according to an embodiment of the present invention. The illustrated contactless power supply system includes a power transmitter 1 and a power receiver 2. The power transmitter 1 generates high-frequency power and contactlessly transmits the resulting high-frequency power to the power receiver 2. The power receiver 2 contactlessly receives the high-frequency power transmitted from the power transmitter 1. The power receiver 2 converts the received high-frequency power into an appropriate form and supplies the resulting power to a power storage device 22, which is included in the power receiver 2. The power storage 22 is charged with the power supplied thereto. Hence, the contactless power supply system in this embodiment is a wireless charging system in which the power storage device 22 is charged with power that is wirelessly transferred from the power transmitter 1 to the power receiver 2.

The contactless power supply system of Fig. 1 may be used to charge the power storage device 22 to be provided in any of a variety of industrial products, including unmanned transport vehicles, electric vehicles and electric tools. Such an industrial product operates on electric power stored on the power storage device 22 to carry out various actions. The power receiver 2 as a whole may be provided in the same industrial product as the power storage device 22.

The power transmitter 1 includes a high-frequency power supply 11, a controller 12 and a power transmitting unit 13.

The high-frequency power supply 11 generates high-frequency power for output to the power transmitting unit 13. Preferably, the output frequency of the high-frequency power supply 11 is at 1 MHz or higher because higher frequency allows a transmitting coil L13, which will be described later, to be smaller. The high-frequency power supply 11 includes a DC power supply 111, an inverter circuit 112, a matching circuit 113 and a power detector 114. The high-frequency power supply 11 includes a protection circuit (not shown) that limits reflected power Pr, ensuring that the reflectedpower Pr entering the high-frequency power supply 11 does not exceed a predetermined value (upper limit). The high-frequency power supply 11 may be damaged if such high reflected power Pr is inputted. The protection circuit protects the high-frequency power supply 11 from damage by such a reflected power Pr.

The DC power supply 111 outputs DC power and includes, for example, a rectifier circuit and a smoothing capacitor respectively for rectifying and smoothing AC power received from an electric power system. The DC power supply 111 is not limited to the one that outputs DC power by converting AC power. The DC power supply 111 may be any DC source, such as a fuel cell, a storage battery or a photovoltaic solar cell.

The inverter circuit 112 converts DC power received from the DC power supply 111 to high-frequency power. In one example, the inverter circuit 112 is a single-phase full bridge inverter circuit having four switching elements. Each switching element may be a bipolar transistor, a metal oxide semiconductor field effect transistor (MOSFET) or an insulated gate bipolar transistor (IGBT). The inverter circuit 112 converts DC power to high-frequency power in response to a high frequency signal S_{INV} inputted from the controller 12, which will be described later. The inverter circuit 112 is not limited to the configuration described above and may have any other configuration which can afford conversion of DC power to high-frequency power.

The matching circuit 113 reduces the reflected power at the output end of high-frequency power supply 11 by adjusting the output impedance looking from the output end of the high-frequency power supply 11 toward the power source (DC power supply 111). The matching circuit 113 may include a capacitor and an inductor that are connected in an L shape to constitute an L circuit. The capacitor and the inductor of the matching circuit 113 respectively have capacitance and inductance that are determined in advance to achieve the optimal transmission efficiency for a predetermined input impedance looking from the output end of the high-frequency power supply 11 toward the load. In other words, the matching circuit 113 does not perform automatic matching of the input impedance. Rather, the matching circuit 113 has settings determined in advance to achieve an intended output impedance. The matching circuit 113 is not limited to an L circuit, and may alternatively be an inverted L circuit, π circuit or T circuit, for example. The matching circuit 113 may include a transformer having a ferrite core and primary and secondary windings. The input impedance may be adjusted by changing the ratio of the number of turns between the two windings. In some embodiments, the matching circuit 113 may be omitted.

The power detector 114 detects forward power Pf and reflected power Pr at a location of the power detector 114. The power detector 114 includes a directional coupler to detect a forward voltage Vf and a reflected voltage Vr from high-frequency voltage. Then, the power detector 114 converts the value of forward voltage Vf to a forward power Pf and the value of reflected voltage Vr to a reflected power Pr and outputs the resulting values to the controller 12.

The controller 12 controls the high-frequency power supply 11 and is constituted by, for example, a microcomputer or a field-programmable gate array (FPGA). Such a microcomputer may include a central processing unit (CPU), a read only memory (ROM) and a random access memory (RAM).

The controller 12 issues a high-frequency signal S_{INV} to the invertor circuit 112 for controlling the forward power Pf to a set value (for example, 50 watts). The high-frequency signal S_{INV} is generated with reference to the value of the forward power Pf inputted from the power detector 114. Consequently, the high-frequency power supply 11 is controlled to output high-frequency power maintained constant at the set value.

The controller 12 also controls the high-frequency power supply 11 to stop generating high-frequency power, with reference to the value of the reflected power Pr received from the power detector 114. Specifically, the controller 12 stops issuing the high-frequency signal S_{INV} to the inverter circuit 112, upon detection of the reflected power Pr reaching or exceeding a predetermined threshold (hereinafter, "power-stop threshold"). As a result of receiving no high-frequency signal S_{INV}, the high-frequency power supply 11 stops the high-frequency power generation. With no high-frequency power outputted from the high-frequency power supply 11, the power transmitter 1 stops the high-frequency power transmission.

The power transmitting unit 13 is for noncontact transmission of high-frequency power received from the high-frequency power supply 11 to the power receiver 2 (power receiving unit 21). The power transmitting unit 13 may be implemented by a serial resonance circuit including a transmitting coil L13 that is a circular coil having a plurality of turns and a resonance capacitor C13 that is connected in series to the transmitting coil L13. The serial resonance circuit of the power transmitting unit 13 has a resonance frequency adjusted to match the output frequency of the high-frequency power supply 11. The power transmitting unit 13 may alternatively be implemented by a parallel resonance circuit in which the transmitting coil L13 and the resonance capacitor C13 are connected in parallel. In addition, the transmitting coil L13 is not limited to circular.

The power receiver 2 includes a power receiving unit 21, a power storage device 22, a charging circuit 23 and a controller 24.

The power receiving unit 21 contactlessly receives high-frequency power transmitted from the power transmitter 1 (from the power transmitting unit 13). The power receiving unit 21 may be implemented by a serial resonance circuit including a receiving coil L21 that is a circular coil having a plurality of turns and a resonance capacitor C21 that is connected to the receiving coil L21 in series. The serial resonance circuit of the receiving coil L21 has a resonance frequency adjusted to match the output frequency of the high-frequency power supply 11. The power receiving unit 21 may alternatively be implemented by a parallel resonance circuit in which the receiving coil L21 and the resonance capacitor C21 are connected in parallel. In addition, the receiving coil L21 is not limited to circular.

The power storage device 22 is for accumulating electric power and may be implemented by a capacitor, such as an electric double-layer capacitor or a lithium ion capacitor, or a secondary battery, such as a lead storage battery or a lithium-ion battery. For use in a charging system that repeats charging and discharging cycles, capacitors compare favorably to secondary batteries. Specifically, capacitors deteriorate less as a result of charging and discharging and thus have a longer service life, and are available for fast charging with large current. In the present embodiment, the power storage device 22 is implemented by a capacitor. More specifically, the power storage device 22 may be implemented by a single capacitor or two or more capacitors connected in series or in parallel, if a single capacitor is in sufficient to ensure a required charging capacity.

The charging circuit 23 converts high-frequency power received from the power receiving unit 21 into a power having appropriate electrical characteristics and supplies the resulting power to charge the power storage device 22. The charging circuit 23 includes a rectifier circuit 231, a filter circuit 232, a switch 233 and a voltage detector 234. The charging circuit 23 may additionally include a circuit for constant current control, a circuit for constant current constant voltage control and/or a circuit for constant current control, according to the charging characteristics of the power storage device 22.

The rectifier circuit 231 converts (rectifies) the high-frequency power received from the power receiving unit 21 into DC power. The rectifier circuit 231 may be implemented by Schottky barrier diodes connected in a bridge circuit configuration. Although the rectifier circuit 231 is not limited to the configuration described above, the use of Schottky barrier diodes may be preferred in light of that Schottky barrier diodes have a good response to the high frequency of power inputted to the rectifier circuit 231.

The filter circuit 232 receives DC power from the rectifier circuit 231 and outputs the DC power after removing high-frequency components. The provision of the filter circuit 232 may not be essential but preferred for removing high-frequency components which would otherwise affect the power storage device 22.

The filter circuit 232 includes a capacitor C232 and an inductor L232, for example. The capacitor C232 has two terminals one of which is connected to the high-voltage output terminal of the rectifier circuit 231, and the other to the low-voltage output terminal. In other words, the capacitor C232 is connected to the rectifier circuit 231 in parallel. The inductor L232 has two terminals, one of which is connected to the high-voltage output terminal of the rectifier circuit 231 and the other to a terminal of the switch 233, which will be described later. In other words, the inductor L232 is connected in series to the high-voltage output terminal of the rectifier circuit 231.

The capacitor C232 may be a ceramic capacitor that allows the passage of high-frequency components present in DC power, whereas the inductor L232 attenuates high-frequency components present in DC power. With this configuration, high-frequency components present in the current outputted from the rectifier circuit 231 will not flow into the inductor L232 but flow into the capacitor C232. In this way, the filter circuit 232 removes high-frequency components from DC power. The filter circuit 232 is not limited to the configuration described above, but may have any configuration which can remove high-frequency components. For example, the inductor L232 may be disposed upstream of the capacitor C232 instead of downstream. In another example, inductors may be disposed both upstream and downstream of the capacitor C232. When the power receiving unit 21 is configured to produce current output, the filter circuit 232 preferably includes the inductor L232 downstream of the capacitor C232 (see Fig. 1). When the power receiving unit 21 is configured to produce voltage output, the filter circuit 232 preferably includes the inductor L232 upstream of the capacitor C232.

The switch 233 is switched between a state of allowing DC power to be supplied to the power storage device 22 and a state of interrupting the DC power. The switch 233 is connected in series to the inductor L232 of the filter circuit 232 and switched to connect and disconnect a current path from the rectifier circuit 231 (the filter circuit 232) to the power storage device 22. In a case where the filter circuit 232 is not provided, the switch 233 may be serially connected to the high-voltage output terminal or the low-voltage output terminal of the rectifier circuit 231.

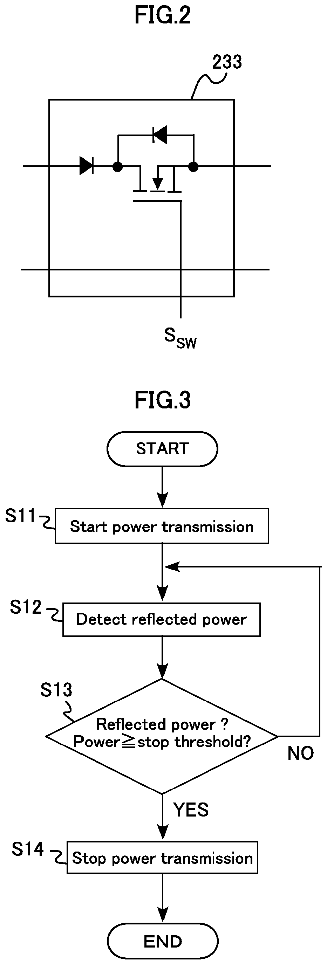

The switch 233 may include a field effect transistor, for example. As shown in Fig. 2, the switch 233 includes a MOSFET as a field effect transistor and may additionally include a diode and/or another component for protecting the MOSFET. Note that the diode may not be provided. The switch 233 switches between a conducting state and an open state according to a switching signal S_{SW} inputted from the controller 24. The switching signal S_{SW} is a voltage signal variable between on-voltage and off-voltage. The switch 233 is switched to the conducting state when the switching signal S_{SW} is at on-voltage and to the open state when the switching signal S_{SW} is at the off-voltage.

Upon input of the on-voltage switching signal S_{SW} from the controller 24, the switch 233 is switched to the conducting state so as to connect the current path to the power storage device 22. As a result, the DC power outputted from the filter circuit 232 is supplied to the power storage device 22. On the other hand, upon input of the off-voltage switching signal S_{SW} from the controller 24, the switch 233 is switched to the open state so as to disconnect the current path to the power storage device 22. As a result, the DC power outputted from the filter circuit 232 is not supplied to the power storage device 22 (that is, the power supply is interrupted).

When the switch 233 is switched from the conducting state to the open state to stop the supply of the DC power from the filter circuit 232 to the power storage device 22, charging of the power storage device 22 is stopped. Thus, power consumed for charging the power storage device 22 becomes zero. At that instant, the reflected power Pr detected by the power detector 114 of the power transmitter 1 undergoes a substantial increase. For example, suppose that the forward power Pf is transmitted at 50 watts as described above. In this case, the reflected power Pr, which may be on the order of a few watts during the charging process, will increase to the order of 20 watts immediately upon transition of the switch 233 to the open state. The value 20 (watts) is equal to a predetermined upper limit for the above-described protection circuit (not shown) included in the high-frequency power supply 11. Without the protection circuit, the reflected power Pr would rise close to 50 watts, which is equal to the forward power Pf. With the provision of the protection circuit, the reflected power Pr is limited at most to 20 watts . Thus, the reflected power Pr to be detected does not exceed the preset value in the protection circuit. In view of this, the power-stop threshold set in the controller 12 may be equal to or slightly less than the upper limit of the reflected power Pr set in the protection circuit. With reference to the specific values mentioned above, for example, the power-stop threshold may be in a range of 10 to 20 watts.

The switch 233 may be implemented by a switching element, such as a bipolar transistor or an insulated gate bipolar transistor (IGBT), rather than the field effect transistor (MOSFET) mentioned above. Also, a mechanical switch such as a relay switch may be used rather than the switching element. As the switching element, however, a field effect transistor (MOSFET) may be preferred to a bipolar transistor in order to reduce the power consumed by the switch 233 and reduce the size of the charging circuit 23.

The voltage detector 234 detects the charge voltage of the power storage device 22 and outputs the detected value of the charge voltage to the controller 24.

The controller 24 controls the charging circuit 23 and is implemented by a FPGA or a microcomputer including a CPU, ROM and RAM, for example.

The controller 24 issues a switching signal S_{SW} to the switch 233 according to the charge state of the power storage device 22. Specifically, when the value of the charge voltage received from the voltage detector 234 is less than a threshold (hereinafter, "charge-completion threshold"), the controller 24 determines that charging of the power storage device 22 is not completed yet (i.e., the power storage device 22 is not in a full charge state) and thus generates a switching signal S_{SW} at the on-voltage, which will turn the switch 233 to the conducting state. When the charge voltage is not less than the charge-completion threshold, the controller 24 determines that charging of the power storage device 22 has been completed (i.e., the power storage device 22 is in a full charge state) and thus generates a switching signal S_{SW} at the off voltage, which will turn the switch 233 to the open state. In this manner, the switch 233 is switched between the conducting state and the open state, whereby the controller 24 controls on and off of the DC power supply to the power storage device 22. The charge-completion threshold may be determined with reference to the chargeable capacity of the power storage device 22 in the power receiver 2.

Next, the following describes the power supply stop control performed by the contactless power supply system having the configuration described above. The power supply stop control of the present invention involves the power supply control performed by the power transmitter 1 and the charge control performed by the power receiver 2.

Fig. 3 is a flowchart showing the power supply control performed by the power transmitter 1. For convenience of description, it is assumed that the power transmitter 1 is not transmitting high-frequency power at the start of the control.

When a user operates a power-transmission start button (not illustrated) on the power transmitter 1, a command associated with the operated button is inputted to the controller 12. According to the command, the controller 12 issues a high-frequency signal S_{INV} to the inverter circuit 112. In response, the inverter circuit 112 generates high-frequency power. Through the above operations, the high-frequency power supply 11 outputs high-frequency power to the power transmitting unit 13, allowing the power transmitting unit 13 to start transmitting the high-frequency power (step S11).

Consequently, the power detector 114 of the high-frequency power supply 11 detects reflected power Pr (step S12). The value of the reflected power Pr detected by the power detector 114 is inputted to the controller 12.

The controller 12 checks the value of reflected power Pr inputted from the power detector 114 to monitor whether the reflected power Pr has reached or exceeded the power-stop threshold (step S13). When the reflected power Pr is less than the power-stop threshold, the controller 12 continues to issue the high-frequency signal S_{INV}. The monitoring of the reflected power Pr is continued until the power-stop threshold is reached or exceeded (steps S12 and S13 are repeated).

In step S13, when the value of the reflected power Pr is not less than the power-stop threshold, the controller 12 stops issuing the high-frequency signal S_{INV}. With the high-frequency signal S_{INV} no longer inputted to the inverter circuit 112, the inverter circuit 112 stops the high-frequency power conversion. Consequently, no high-frequency power is generated and supplied from the high-frequency power supply 11. Thus, the power transmitting unit 13 stops the transmission of high-frequency power (step S14).

The power transmission may be stopped by a user at a push of a power-supply stop button (not illustrated) during the power control operation described above. When the power-supply stop button is pushed, a responsive command is inputted to the controller 12. By the command, the controller 12 stops issuing the high-frequency signal S_{INV}, and the power transmission is stopped.

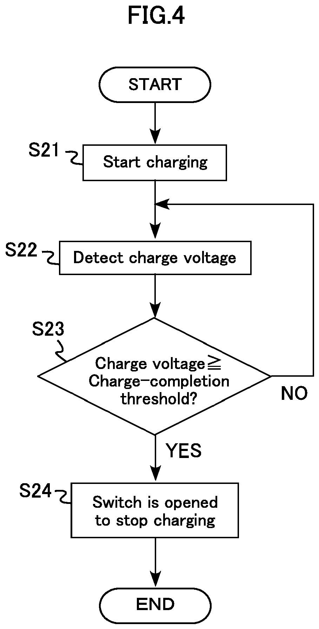

Fig. 4 is a flowchart of the charging control performed by the power receiver 2. For convenience of description, it is assumed that the charge voltage of the power storage device 22 at the start of the control is less than the charge-completion threshold. In addition, as the charge voltage of the power storage device 22 is less than the charge-completion threshold, the switch 233 is assumed to be in the conducting state.

When the power transmitter 1 starts the power transmission in step S11, the power receiving unit 21 receives high-frequency power transmitted from the power transmitter 1. The charging circuit 23 converts the high-frequency power to DC power and supplies the DC power to the power storage device 22. In other words, the power receiver 2 receives the high-frequency power and starts charging the power storage device 22 (step S21).

Then, the voltage detector 234 detects the charge voltage of the power storage device 22 (step S22). The value of the charge voltage detected by the voltage detector 234 is inputted to the controller 24.

The controller 24 checks the detected value of the charge voltage inputted from the voltage detector 234 to monitor whether the charge voltage has reached or exceeded the charge-completion threshold (step S23). When the value of the charge voltage is less than the charge-completion threshold, the controller 24 determines that charging is not completed yet, and issues a switching signal S_{SW} at the on-voltage to the switch 233. In response, the switch 233 is in the conducting state (or remains in the conducting state from the start of the control). As a result, the DC power is outputted from the charging circuit 23 to the power storage device 22, so that the power storage device 22 is charged with the DC power. The controller 24 continues to monitor the charge voltage until the charge-completion threshold is reached (steps S22 and S23 are repeated).

When the value of the charge voltage is not less than the charge-completion threshold in step S23, the controller 24 issues the switching signal S_{SW} at the off-voltage to the switch 233, so that the switch 233 is placed in the open state (switched from the conducting state to the open state). As a result, no DC power is outputted from the charging circuit 23 and no power is supplied to the power storage device 22, so that charging of the power storage device 22 is stopped.

Through the power transmission control by the power transmitter 1 (Fig. 3) and the charge control by the power receiver 2 (Fig. 4), contactless transmission of high-frequency power from the power transmitter 1 to the power receiver 2 is achieved, and the power receiver 2 charges the power storage device 22 using the received high-frequency power.

Further, when the power storage device 22 is charged to a voltage reaching or exceeding the charge-completion threshold, the controller 24 determines that charging of the power storage device 22 has been completed and switches the switch 233 in the charging circuit 23 to the open state. As a result, the flow of DC power from the charging circuit 23 to the power storage device 22 is interrupted. In this way, the charging of the power storage device 22 is stopped and overcharging of the power storage device 22 is avoided.

When the power storage 22 stops consuming the power supplied thereto, reflected power Pr increases and eventually reaches or exceeds the power-stop threshold. On detecting the reflected power Pr reaching or exceeding the power-stop threshold, the power transmitter 1 stops the power transmission. Note that the increase in the reflected power Pr when the power supply to the power storage device 22 is stopped interrupted is significantly large as compared with the fluctuations occurring during the charging. Therefore, in spite of the fluctuations of the reflected power Pr, the power transmitter 1 can properly determine that the charging of the power storage device 22 has been completed. In addition, as the power transmitter 1 stops the power transmission upon charge completion of the power storage device 22, wasteful power consumption is reduced.

As noted above, the contactless power supply system according to the present invention is configured such that the power receiver 2 stops supplying power to the power storage device 22 upon charge completion of the power storage device 22, so that a significant increase occurs in the reflected power Pr. Such a significant increase in the reflected power Pr is readily detectable even with minor fluctuations of the reflected power Pr present, thereby allowing the power transmitter 1 to reliably determine that the charging of the power storage device 22 has been completed. Thus, without any communication means, the power transmitter 1 can reliably determine that the power storage device 22 is completely charged and accordingly stop the power transmission to the power receiver 2 upon completion of charging the power storage device 22.

In addition, interrupting the power supply to the power storage device 22 causes the reflected power Pr to increase, irrespective of whether the power storage device 22 is charged by constant current charging, constant voltage charging or constant current/constant voltage charging. Therefore, the power transmitter 1 can appropriately determine the charge state of the power storage device 22 irrespective of the charging system employed.

In the embodiment described above, the controller 12 operates to stop the high-frequency power generation when the reflected power reaches or exceeds the power-stop threshold. However, this is merely one example and does not constitute a limitation. Instead of directly using the reflected power, the ratio of the reflected power Pr to the forward power Pf (reflection coefficient: Pr/Pf) may be used. In this case, the controller 12 calculates the reflection coefficient from the forward power Pf and the reflected power Pr both detected by the power detector 114 and operates to stop the power transmission when the reflection coefficient reaches or exceeds a power-stop threshold of the reflection coefficient determined in advance.

In another example, an amount of change of the reflected power Pr may be used. In this case, the controller 12 calculates the change amount of the reflected power Pr detected by the power detector 114 (a difference between a previously detected value and a currently detected value) and operates to stop the power transmission when the change amount in the reflected power Pr reaches or exceeds a power-stop threshold of the amount change determined in advance. The reflection coefficient and the change amount of the reflected power Pr both exhibit a significant change when the reflected power Pr undergoes a significant change. Therefore, the power transmitter 1 can appropriately determine when the charging of the power storage device 22 has been completed.

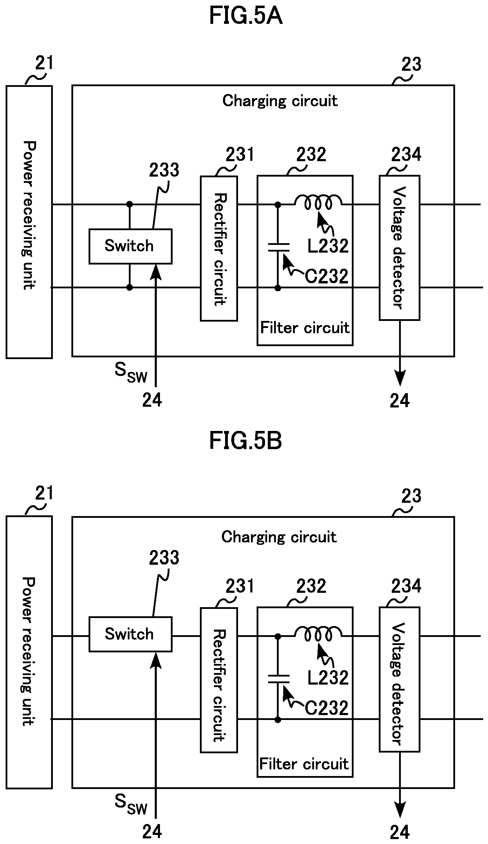

In the above embodiment, the switch 233 is connected in series to the inductor L232 in the filter circuit 232. However, this is merely one example and does not constitute a limitation. For example, as shown in Figs. 5A and 5B, the switch 233 may be connected between the power receiving unit 21 and the rectifier circuit 231 in parallel (Fig. 5A) or in series (Fig. 5B) . For example, for the power receiving unit 21 used to produce current output, the switch 233 may be connected between the power receiving unit 21 and the rectifier circuit 231 in parallel as shown in Fig. 5A. In this case, power is supplied to the power storage device 22 when the switch 233 is in the open state, whereas no power is supplied to the power storage device 22 when the switch 233 is in the conducting state. For the power receiving unit 21 used to produce voltage output, the switch 233 may be connected between the power receiving unit 21 and the rectifier circuit 231 in series as shown in Fig. 5B. In this case, power is supplied to the power storage device 22 when the switch 233 is in the conducting state, whereas no power is supplied to the power storage device 22 when the switch 233 is in the open state. For the switch 233 connected between the power receiving unit 21 and the rectifier circuit 231, a switch suitable for alternating current (AC switch) is preferable. In one example, an AC switch may be implemented by two MOSFETs connected in anti-series. As has been described above, the switch 233 may be disposed between the power receiving unit 21 and the rectifier circuit 231. The switch 233 in this arrangement achieves to supply and interrupt power to the power storage device 22 by being switched between the conducting state and the open state. In addition, connecting the switch 233 in parallel allows the switch 233 to stay in the open state during the charging, which is usually takes a relatively long time period. Thus, the on-voltage switching signal S_{SW} to the switch 233 is required for a relatively short time period.

In the embodiment described above, the power transmitter 1 starts the power transmission at a push of the power-transmission start button by a user. However, this is merely an example and does not constitute a limitation. In one alternative example, the power transmitter 1 may additionally include a sensor for detecting the presence of the power receiver 2 at a feed point of the power transmitter 1. The power transmitter 1 automatically starts the power transmission when the detection result of the sensor indicates that the power receiver 2 once absent is now present at the feed point. Alternatively, the power transmitter 1 may automatically start the power transmission a predetermined time period after the previously performed power transmission is stopped. The power transmitter 1 that automatically starts the power transmission eliminates the need for a user to operate (push) the power-transmission start button. In addition, the power transmitter 1 that automatically repeats the power transmission after a predetermined time period can keep the power storage device 22 in a full charged state substantially at all times. This is advantageous in light of that the power stored on the power storage device 22 may decrease due to standby power consumption associated with an industrial system that includes the power receiver 2 or due to self-discharge of the power storage device 22.

In the modification for automatically and periodically start power transmission, the power storage device 22 of the power receiver 2 may be fully charged already when placed at the feed point of the power transmitting unit 13. In this case, the power receiver 2 detects the charge voltage not less than the charge-completion threshold and thus interrupts the power to the power storage device 22. Consequently, the power transmitter 1 will detect the reflected power Pr not less than the power-stop threshold and thus stop the power transmission soon after the automatic start of the power transmission. For example, if the power storage device 22 (the power receiver 2) is charged to full and left to stand at the feed point, a subsequent cycle of power transmission will be automatically started. However, the power transmitter 1 will soon stop the power transmission without oversharing the power storage device 22. In another case, the power receiver 2 may not be located at the feed point of the power transmitting unit 13. In this case, the reflected power Pr remains high, i.e., not less than the power-stop threshold. Thus, the automatically started power transmission will be stopped immediately.

Although the power transmitter 1 of the embodiment described above includes one power transmitting unit 13, a plurality of power transmitting units 13 may be included. A plurality of power transmitting unit 13 enable power transmission to a plurality of power receivers 2 at the same time. The following describes a modification in which the power transmitter 1 includes a plurality of power transmitting units 13. In the description, elements that are the same as or similar to those of the above-described embodiment (Fig 1) are denoted by the same reference signs.

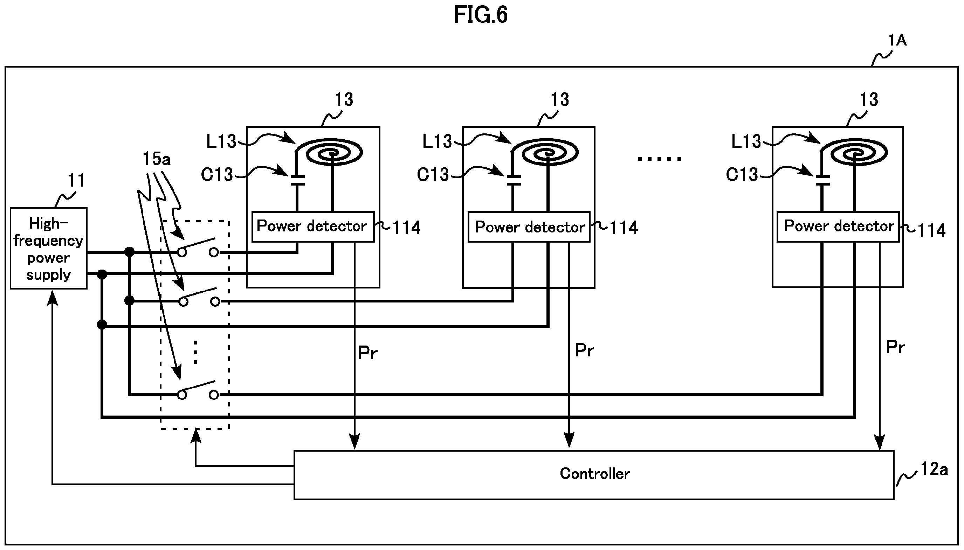

Fig. 6 is a diagram showing the overall configuration of a power transmitter 1A that includes a plurality of power transmitting units 13 connected in parallel to the high-frequency power supply 11. Fig. 6 does not show any receiver 2.

The power transmitter 1A also includes a plurality of changeover elements or switches 15a connected in series between the respective power transmitting units 13 and the high-frequency power supply 11. The changeover elements 15a are each independently switched according to a changeover signal inputted from the controller 12a, between a state of allowing high-frequency power to be supplied to a corresponding power transmitting unit 13 and a state of interrupting the high-frequency power. Specifically, each changeover element 15a electrically connects the high-frequency power supply 11 to the corresponding power transmitting unit 13 when the changeover signal is set to on, and electrically disconnects the high-frequency power supply 11 from the power transmitting unit 13 when the changeover signal is set to off. Alternatively, each changeover element 15 may be switched to electrically disconnect the high-frequency power supply 11 to the power transmitting unit 13 when the changeover signal is set to on, and to electrically connect the high-frequency power supply 11 to the power transmitting unit 13 when the changeover signal set to is off. The changeover elements 15a may not be limited to a specific configuration and may be of any configuration capable of switching the individual power transmitting units 13 between the connected state and the disconnected state.

The power transmitter 1 described above includes one power detector 114 in the high-frequency power supply 11. The power transmitter 1A may include a plurality of power detectors 114 disposed for the respective power transmitting units 13 so that reflected power Pr is detected for the respective power transmitting units 13. The power detectors 114 may be disposed at any suitable location as long as the detection of the reflected power Pr separate for each power transmitting unit 13 is possible.

The controller 12a operates similarly to the controller 12 described above and additionally issues a changeover signal to the changeover elements 15a. The controller 12a determines whether each value of the reflected power Pr inputted from the respective power detectors 114 is not less than the power-stop threshold and specifies any power transmitting unit 13 corresponding to the reflected power Pr not less than power-stop threshold. The controller 12a then issues, to each changeover element 15a coupled to the specified power transmitting unit (s) 13, a changeover signal for causing the power transmitting unit 13 to be electrically disconnected. To each changeover element 15a coupled to a power transmitting unit 13 that is not specified, the controller 12a issues a changeover signal for keeping the power transmitting unit 13 to be electrically connected. Through the above operation of the controller 12a, when any power storage device 22 becomes fully charged, the power transmission to the power receiver 2 including that power storage device 22 is stopped. In this way, only a power transmitting unit 13 paired with a power receiver 2 that requires charging is electrically connected to the high-frequency power supply 11 and transmits power to that power receiver 2.

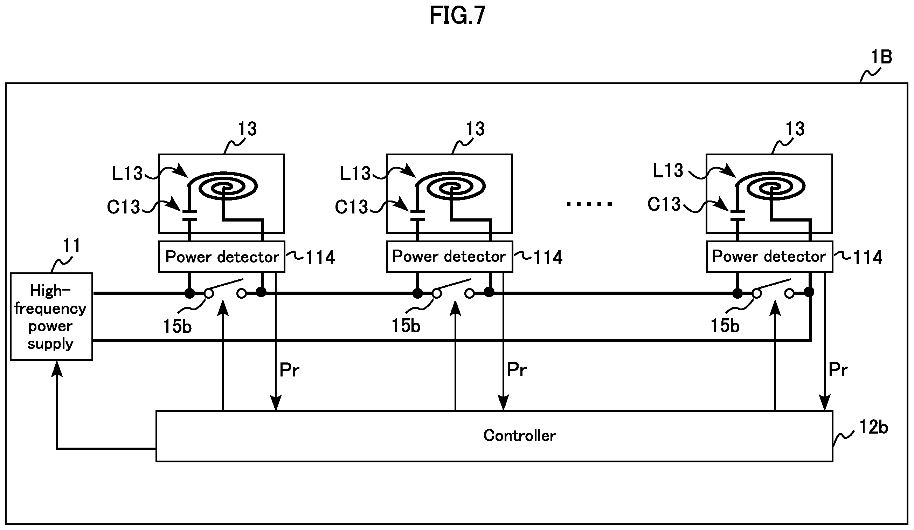

Fig. 7 is a diagram showing the overall configuration of a power transmitter 1B that includes a plurality of power transmitting units 13 connected in series to the high-frequency power supply 11. Fig. 7 does not show any receiver 2.

The power transmitter 1B also includes a plurality of changeover elements 15b connected in parallel between a pair of input terminals of the respective power transmitting units 13. The changeover elements 15b are each independently switched according to a changeover signal inputted from the controller 12b, between a state of allowing high-frequency power to be supplied to a corresponding power transmitting unit 13 and a state of interrupting the high-frequency power. Specifically, each changeover element 15b is switched to a conducting state when the changeover signal is set to on. The changeover element 15b in the conducting state short-circuits the input terminals of the corresponding power transmitting unit 13 so that the high-frequency power outputted from the high-frequency power supply 11 bypasses the power transmitting unit 13 . When the changeover signal is set to off, each changeover element 15b is switched to an open state. The changeover element 15b in the open state causes the high-frequency power outputted from the high-frequency power supply 11 to flow into the corresponding power transmitting unit 13. Alternatively, each changeover element 15b may be switched to the open state to cause the high-frequency power to be supplied to the power transmitting unit 13 when the changeover signal is set to on, and to the conducting state to cause the high-frequency power to bypass the power transmitting unit 13 when the changeover signal is set to off.

The power transmitter 1B includes a plurality of power detectors 114 disposed for the respective power transmitting units 13. Each of the power detectors 114 may be disposed at any suitable location as long as the detection of the reflected power Pr separate for each power transmitting unit 13 is possible.

The controller 12b operates similarly to the controller 12 described above and additionally issues a changeover signal to the changeover element 15b. The controller 12b determines whether each value of the reflected power Pr inputted from the respective power detectors 114 is not less than the power-stop threshold and specifies any power transmitting unit 13 corresponding to the reflected power Pr not less than power-stop threshold. The controller 12b then issues, to each changeover element 15b coupled to a specified power transmitting units 13, a changeover signal for switching the changeover element 15b to the conducting state. To each changeover element 15b coupled to a power transmitting unit 13 that is not specified, the controller 12b issues a changeover signal for switching the changeover element 15b to the open state. Through the above operation of the controller 12b, when any power storage device 22 becomes fully charged, the power transmission to the power receiver 2 including that power storage device 22 is stopped. In this way, the changeover elements 15b are switched such that only a power transmitting unit 13 paired with a power receiver 2 that requires charging is enabled to receive high-frequency power from the high-frequency power supply 11.

In the case where a plurality of power transmitting units 13 are provided as in the examples shown in Figs. 6 and 7, whether to connect the power transmitting units 13 in parallel or in series may be appropriately determined based on the type of high-frequency power supply 11 employed. More specifically, the power transmitting units 13 may be connected in parallel to the high-frequency power supply 11 as shown in Fig. 6 when the high-frequency power supply 11 is implemented by a fixed voltage source, and in series as shown in Fig. 7 when the high-frequency power supply 11 is implemented by a fixed current source.

With respect to the power transmitters 1A and 1B each including a plurality of power transmitting units 13, there may be a case where none of the power transmitting units 13 are in use to transmit high-frequency power (i.e., where no power receiver 2 is placed at the feed point of any power transmitting unit 13, or a power receiver 2 placed at the feed point of a power transmitting unit 13 is fully charged). In that case, the controller 12a or 12b may stop issuing a high-frequency signal S_{INV} to the inverter circuit 112, thereby stopping the generation of high-frequency power.

Modifications using the power transmitters 1A and 1B can achieve an effect similar to that of the embodiment noted above and enable the power transmitters 1A and 1B to appropriately determine the charge state of a power receiver 2 and stop the power transmission to the power receiver 2 that is already in a full charge state.

The above description is directed to the contactless power supply systems according to embodiments and modifications of the present invention have been described. However, the present invention is not limited to the contactless power supply systems and the power receivers for use in such a contactless power supply system described above. Various design changes may be made to the specific configurations of the units and elements without departing from the scope of the present invention set forth in the appended claims.

## Claims

1. A contactless power supply system comprising a power transmitter (1) and a power receiver (2),
wherein the power transmitter (1) includes:
a high-frequency power generator (111) that generates high-frequency power;
at least one power transmitting unit (13) including a transmitting coil (L13) and a resonance capacitor (C13) connected to the transmitting coil (L13), the power transmitting unit (13) contactlessly transmitting the high-frequency power to the power receiver (2);
at least one power detector (114) that detects reflected power from the power receiver (2); and
a transmitter-side controller (12) for stopping the transmission of the high-frequency power to the power receiver (2) with reference to the reflected power,
wherein the power receiver (2) includes:
a power receiving unit (21) including a receiving coil (L21) magnetically coupled to the transmitting coil (L13) and a resonance capacitor (C21) connected to the receiving coil (L21), the power receiving unit (21) contactlessly receiving the high-frequency power transmitted from the power transmitting unit (13);
a rectifier circuit (231) that converts the high-frequency power received by the power receiving unit (21) into direct current power;
a power storage device (22) chargeable with the direct current power;
a switch (233) operated to electrically connect and disconnect a path to supply the direct current power to the power storage device (22); and
a receiver-side controller (24) that operates the switch (233) so as to electrically disconnect the path when the power storage device (22) is in a full charge state, **characterised in that** the transmitter-side controller (12) is configured to stop the transmission of the high-frequency power in response to a determination that the power storage device (22) is completely charged based upon the reflected power reaching or exceeding a power-stop threshold.

2. The contactless power supply system according to claim 1, wherein the power receiver (2) includes a voltage detector (234) that detects a charge voltage of the power storage device (22), and the receiver-side controller (24) determines that the power storage device (22) is in the full charge state when the charge voltage reaches a target voltage.

3. The contactless power supply system according to claim 1 or 2, wherein the transmitter-side controller (12) causes the transmission of the high-frequency power to be stopped when the reflected power reaches a threshold.

4. The contactless power supply system according to claim 1 or 2, wherein the power detector (114) detects forward power, and the transmitter-side controller (12) causes the transmission of the high-frequency power to be stopped when a reflection coefficient reaches a threshold, the reflection coefficient being a ratio of the reflected power to the forward power.

5. The contactless power supply system according to any one of claims 1 to 4, wherein the switch (233) is connected in series to an output terminal of the rectifier circuit (231), and the switch (233) allows the direct current power to be supplied to the power storage device (22) when in a conducting state, and does not allow the direct current power to be supplied to the power storage device (22) when in an open state.

6. The contactless power supply system according to any one of claims 1 to 4, wherein the switch (233) is connected in series or in parallel between the power receiving unit (21) and the rectifier circuit (231).

7. The contactless power supply system according to any one of claims 1 to 6, wherein the power receiver (2) includes a filter circuit (232) connected between the rectifier circuit (231) and the power storage device (22) for attenuating harmonic components in the direct current power outputted from the rectifier circuit (231).

8. The contactless power supply system according to any one of claims 1 to 7, wherein the switch (233) comprises a field-effect transistor.

9. The contactless power supply system according to any one of claims 1 to 8, wherein the power storage device (22) comprises a capacitor.

10. The contactless power supply system according to any one of claims 1 to 9, wherein the high-frequency power has a frequency of 1 MHz or higher.

11. The contactless power supply system according to any one of claims 1 to 10, wherein the transmitter-side controller (12) controls the high-frequency power generator (111) such that the high-frequency power is outputted at a constant level.

12. The contactless power supply system according to any one of claims 1 to 11, wherein the transmitter-side controller (12) causes the transmission of the high-frequency power to be stopped by controlling the high-frequency power generator (111) to stop generating the high-frequency power.

13. The contactless power supply system according to any one of claims 1 to 11, wherein:
the at least one power transmitting unit (13) comprises a plurality of power transmitting units, and the at least one power detector (114) comprises a plurality of power detectors,
the power transmitter (1) comprises a plurality of changeover elements (15a, 15b) disposed for the plurality of power transmitting units, respectively, the plurality of changeover elements being operated to or not to supply the high-frequency power generated by the high-frequency power generator (111) to the plurality of power transmitting units,
the plurality of power transmitting units are connected in parallel or in series to the high-frequency power generator (11),
the plurality of power detectors are disposed for the plurality of power transmitting units, respectively, and
the transmitter-side controller (12), with reference to the reflected power detected in each of the plurality of power transmitting units, operates one of the plurality of changeover elements (15a, 15b) that corresponds to said each of the plurality of power transmitting units.

## Patentansprüche

1. Kontaktloses Leistungsversorgungssystem, umfassend einen Leistungssender (1) und einen Leistungsempfänger (2),
wobei der Leistungssender (1) beinhaltet:
einen Hochfrequenzleistungsgenerator (111), der Hochfrequenzleistung erzeugt;
mindestens eine Leistungsübertragungseinheit (13), die eine Übertragungsspule (L13) und einen mit der Übertragungsspule (L13) verbundenen Resonanzkondensator (C13) beinhaltet, wobei die Leistungsübertragungseinheit (13) die Hochfrequenzleistung kontaktlos an den Leistungsempfänger (2) überträgt;
mindestens einen Leistungsdetektor (114), der reflektierte Leistung von dem Leistungsempfänger (2) erfasst; und
eine senderseitige Steuerung (12) zum Stoppen der Übertragung der Hochfrequenzleistung an den Leistungsempfänger (2) in Bezug auf die reflektierte Leistung, wobei der Leistungsempfänger (2) beinhaltet:
eine Leistungsempfangseinheit (21), die eine Empfangsspule (L21), die magnetisch mit der Übertragungsspule (L13) gekoppelt ist, und einen Resonanzkondensator (C21) beinhaltet, der mit der Empfangsspule (L21) verbunden ist, wobei die Leistungsempfangseinheit (21) die von der Leistungsübertragungseinheit (13) übertragene Hochfrequenzleistung kontaktlos empfängt;
eine Gleichrichterschaltung (231), die die von der Leistungsempfangseinheit (21) empfangene Hochfrequenzleistung in Gleichstromenergie umwandelt;
eine Energiespeichervorrichtung (22), die mit der Gleichstromenergie aufladbar ist;
einen Schalter (233), der betätigt wird, um einen Weg elektrisch zu verbinden und zu trennen, um die Gleichstromenergie an die Energiespeichervorrichtung (22) zu liefern; und
eine empfängerseitige Steuerung (24), die den Schalter (233) betätigt, um den Weg elektrisch zu trennen, wenn sich die Energiespeichervorrichtung (22) in einem vollen Ladezustand befindet, **dadurch gekennzeichnet, dass** die senderseitige Steuerung (12) konfiguriert ist, um die Übertragung der Hochfrequenzleistung als Reaktion auf eine Bestimmung zu stoppen, dass die Energiespeichervorrichtung (22) basierend auf dem Erreichen oder Überschreiten einer Energiestoppschwelle vollständig geladen ist.

2. Kontaktloses Leistungsversorgungssystem nach Anspruch 1, wobei der Leistungsempfänger (2) einen Spannungsdetektor (234) beinhaltet, der eine Ladespannung der Energiespeichervorrichtung (22) detektiert, und die empfängerseitige Steuerung (24) bestimmt, dass sich die Energiespeichervorrichtung (22) in dem vollen Ladezustand befindet, wenn die Ladespannung eine Zielspannung erreicht.

3. Kontaktloses Leistungsversorgungssystem nach Anspruch 1 oder 2, wobei die senderseitige Steuerung (12) bewirkt, dass die Übertragung der Hochfrequenzleistung gestoppt wird, wenn die reflektierte Leistung einen Schwellenwert erreicht.

4. Kontaktloses Leistungsversorgungssystem nach Anspruch 1 oder 2, wobei der Leistungsdetektor (114) Vorwärtsleistung erfasst und die senderseitige Steuerung (12) bewirkt, dass die Übertragung der Hochfrequenzleistung gestoppt wird, wenn ein Reflektionskoeffizient einen Schwellenwert erreicht, wobei der Reflektionskoeffizient ein Verhältnis der reflektierten Leistung zu der Vorwärtsleistung ist.

5. Kontaktloses Leistungsversorgungssystem nach einem der Ansprüche 1 bis 4, wobei der Schalter (233) in Reihe mit einem Ausgangsanschluss der Gleichrichterschaltung (231) geschaltet ist und der Schalter (233) der Gleichstromenergie erlaubt, der Energiespeichervorrichtung (22) zugeführt zu werden, wenn er in einem leitenden Zustand ist, und der Gleichstromenergie nicht erlaubt, der Energiespeichervorrichtung (22) zugeführt zu werden, wenn er in einem offenen Zustand ist.

6. Kontaktloses Leistungsversorgungssystem nach einem der Ansprüche 1 bis 4, wobei der Schalter (233) in Reihe oder parallel zwischen der Leistungsempfangseinheit (21) und der Gleichrichterschaltung (231) geschaltet ist.

7. Kontaktloses Leistungsversorgungssystem nach einem der Ansprüche 1 bis 6, wobei der Leistungsempfänger (2) eine Filterschaltung (232) beinhaltet, die zwischen der Gleichrichterschaltung (231) und der Energiespeichervorrichtung (22) zum Dämpfen von harmonischen Komponenten in der von der Gleichrichterschaltung (231) abgegebenen Gleichstromenergie geschaltet ist.

8. Kontaktloses Leistungsversorgungssystem nach einem der Ansprüche 1 bis 7, wobei der Schalter (233) einen Feldeffekttransistor umfasst.

9. Kontaktloses Leistungsversorgungssystem nach einem der Ansprüche 1 bis 8, wobei die Energiespeichervorrichtung (22) einen Kondensator umfasst.

10. Kontaktloses Leistungsversorgungssystem nach einem der Ansprüche 1 bis 9, wobei die Hochfrequenzleistung eine Frequenz von 1 MHz oder höher aufweist.

11. Kontaktloses Leistungsversorgungssystem nach einem der Ansprüche 1 bis 10, wobei die senderseitige Steuerung (12) den Hochfrequenzleistungsgenerator (111) so steuert, dass die Hochfrequenzleistung konstant abgegeben wird.

12. Kontaktloses Leistungsversorgungssystem nach einem der Ansprüche 1 bis 11, wobei die senderseitige Steuerung (12) bewirkt, dass die Übertragung der Hochfrequenzleistung gestoppt wird, indem sie den Hochfrequenzleistungsgenerator (111) steuert, um das Erzeugen der Hochfrequenzleistung zu stoppen.

13. Kontaktloses Leistungsversorgungssystem nach einem der Ansprüche 1 bis 11, wobei:
die mindestens eine Leistungsübertragungseinheit (13) mehrere Leistungsübertragungseinheiten umfasst, und der mindestens eine Leistungsdetektor (114) mehrere Leistungsdetektoren umfasst,
der Leistungssender (1) mehrere Umschaltelemente (15a, 15b) umfasst, die jeweils für die mehreren Leistungsübertragungseinheiten angeordnet sind,
wobei die mehreren Umschaltelemente betrieben werden, um die vom Hochfrequenzleistungsgenerator (111) erzeugte Hochfrequenzleistung den mehreren Leistungsübertragungseinheiten bereitzustellen oder nicht,
die mehreren Leistungsübertragungseinheiten parallel oder in Reihe mit dem Hochfrequenzleistungsgenerator (11) geschaltet sind,
die mehreren Leistungsdetektoren jeweils für die mehreren Leistungsübertragungseinheiten angeordnet sind, und
die senderseitige Steuerung (12), unter Bezugnahme auf die in jeder der mehreren Leistungsübertragungseinheiten detektierte reflektierte Leistung, eines der mehreren Umschaltelemente (15a, 15b) betätigt, das der jeweiligen der mehreren Leistungsübertragungseinheiten entspricht.

## Revendications

1. Système d'alimentation électrique sans contact comprenant un émetteur de puissance (1) et un récepteur de puissance (2),
dans lequel l'émetteur de puissance (1) comporte :
un générateur de puissance à haute fréquence (111) qui engendre une puissance à haute fréquence ;
au moins une unité de transmission de puissance (13) comportant une bobine de transmission (L13) et un condensateur de résonance (C13) connecté à la bobine de transmission (L13), l'unité de transmission de puissance (13) transmettant sans contact la puissance à haute fréquence au récepteur de puissance (2) ;
au moins un détecteur de puissance (114) qui détecte une puissance réfléchie par le récepteur de puissance (2) ; et
un dispositif de commande côté émetteur (12) destiné à faire cesser la transmission de la puissance à haute fréquence au récepteur de puissance (2) en référence à la puissance réfléchie, dans lequel le récepteur de puissance (2) comporte :
une unité de réception de puissance (21) comportant une bobine de réception (L21) couplée magnétiquement à la bobine de transmission (L13) et un condensateur de résonance (C21) connecté à la bobine de réception (L21), l'unité de réception de puissance (21) recevant sans contact la puissance à haute fréquence transmise par l'unité de transmission de puissance (13) ;
un circuit redresseur (231) qui convertit la puissance à haute fréquence reçue par l'unité de réception de puissance (21) en une puissance à courant continu ;
un dispositif de stockage d'énergie (22) pouvant être chargé par la puissance à courant continu ;
un interrupteur (233) actionné pour connecter et déconnecter électriquement un chemin pour fournir la puissance à courant continu au dispositif de stockage d'énergie (22) ; et
un dispositif de commande côté récepteur (24) qui actionne l'interrupteur (233) de manière à déconnecter électriquement le chemin, lorsque le dispositif de stockage d'énergie (22) se trouve dans un état de charge complète, **caractérisé en ce que** le dispositif de commande côté émetteur (12) est conçu pour faire cesser la transmission de la puissance à haute fréquence en réponse à la détermination de ce que le dispositif de stockage d'énergie (22) est complètement chargé, sur la base du fait que la puissance réfléchie atteint ou dépasse un seuil d'arrêt d'alimentation.

2. Système d'alimentation électrique sans contact selon la revendication 1, dans lequel le récepteur de puissance (2) comporte un détecteur de tension (234) qui détecte une tension de charge du dispositif de stockage d'énergie (22), et le dispositif de commande côté récepteur (24) détermine que le dispositif de stockage d'énergie (22) se trouve à l'état de charge complète, lorsque la tension de charge atteint une tension cible.

3. Système d'alimentation électrique sans contact selon la revendication 1 ou 2, dans lequel le dispositif de commande côté émetteur (12) fait cesser la transmission de la puissance à haute fréquence, lorsque la puissance réfléchie atteint un seuil.

4. Système d'alimentation électrique sans contact selon la revendication 1 ou 2, dans lequel le détecteur de puissance (114) détecte une puissance directe, et le dispositif de commande côté émetteur (12) fait cesser la transmission de la puissance à haute fréquence, lorsqu'un facteur de réflexion atteint un seuil, le facteur de réflexion étant un rapport de la puissance réfléchie à la puissance directe.

5. Système d'alimentation électrique sans contact selon l'une quelconque des revendications 1 à 4, dans lequel l'interrupteur (233) est connecté en série à une borne de sortie du circuit redresseur (231), et l'interrupteur (233) permet à la puissance à courant continu d'être fournie au dispositif de stockage d'énergie (22), lorsqu'il se trouve dans un état conducteur, et ne permet pas à la puissance à courant continu d'être fournie au dispositif de stockage d'énergie (22), lorsqu'il se trouve dans un état ouvert.

6. Système d'alimentation électrique sans contact selon l'une quelconque des revendications 1 à 4, dans lequel l'interrupteur (233) est connecté en série ou en parallèle entre l'unité de réception de puissance (21) et le circuit redresseur (231).

7. Système d'alimentation électrique sans contact selon l'une quelconque des revendications 1 à 6, dans lequel le récepteur de puissance (2) comporte un circuit de filtrage (232) connecté entre le circuit redresseur (231) et le dispositif de stockage d'énergie (22) pour atténuer des composantes harmoniques de la puissance à courant continu délivrée en sortie du circuit redresseur (231).

8. Système d'alimentation électrique sans contact selon l'une quelconque des revendications 1 à 7, dans lequel l'interrupteur (233) comprend un transistor à effet de champ.

9. Système d'alimentation électrique sans contact selon l'une quelconque des revendications 1 à 8, dans lequel le dispositif de stockage d'énergie (22) comprend un condensateur.

10. Système d'alimentation électrique sans contact selon l'une quelconque des revendications 1 à 9, dans lequel la puissance à haute fréquence a une fréquence supérieure ou égale à 1 MHz.

11. Système d'alimentation électrique sans contact selon l'une quelconque des revendications 1 à 10, dans lequel le dispositif de commande côté émetteur (12) commande le générateur de puissance à haute fréquence (111) de manière que la puissance à haute fréquence soit délivrée à un niveau constant.

12. Système d'alimentation électrique sans contact selon l'une quelconque des revendications 1 à 11, dans lequel le dispositif de commande côté émetteur (12) fait cesser la transmission de la puissance à haute fréquence en commandant le générateur de puissance à haute fréquence (111) de façon à faire cesser la génération de la puissance à haute fréquence.

13. Système d'alimentation électrique sans contact selon l'une quelconque des revendications 1 à 11, dans lequel :
l'au moins une unité de transmission de puissance (13) comprend une pluralité d'unités de transmission de puissance, et l'au moins un détecteur de puissance (114) comprend une pluralité de détecteurs de puissance,
l'émetteur de puissance (1) comprend une pluralité d'éléments de basculement (15a, 15b) disposés pour la pluralité d'unités de transmission de puissance, respectivement, la pluralité d'éléments de basculement étant actionnée pour fournir ou non la puissance à haute fréquence engendrée par le générateur de puissance à haute fréquence (111) à la pluralité d'unités de transmission de puissance,
la pluralité d'unités de transmission de puissance est connectée en parallèle ou en série au générateur de puissance à haute fréquence (11),
la pluralité de détecteurs de puissance est disposée pour la pluralité d'unités de transmission de puissance, respectivement, et
le dispositif de commande côté émetteur (12), en référence à la puissance réfléchie détectée dans chaque unité de la pluralité d'unités de transmission de puissance, actionne un élément de la pluralité d'éléments de basculement (15a, 15b) qui correspond à chaque unité de ladite pluralité d'unités de transmission de puissance.
